Europäisches Patentamt

European Patent Office

Office européen des brevets

(19)

(11) **EP 1 191 042 A1**

(12) **DEMANDE DE BREVET EUROPEEN**

(43) Date de publication:
   **27.03.2002 Bulletin 2002/13**

(51) Int Cl.⁷: **C08F 14/22**, C07C 17/389,
   C08F 2/02

(21) Numéro de dépôt: **01402387.3**

(22) Date de dépôt: **18.09.2001**

(84) Etats contractants désignés:
   **AT BE CH CY DE DK ES FI FR GB GR IE IT LI LU
   MC NL PT SE TR**
   Etats d'extension désignés:
   **AL LT LV MK RO SI**

(30) Priorité: **26.09.2000 FR 0012191**

(71) Demandeur: **Atofina**
   **92800 Puteaux (FR)**

(72) Inventeur: **Senninger, Thierry**
   **57700 Hayange (FR)**

(74) Mandataire: **Neel, Henry**
   **Atofina,**
   **DPI,**
   **Cours Michelet,**
   **La Défense 10**
   **92091 Paris La Défense Cedex (FR)**

(54) **Procédé de polymérisation du 1,1-difluoroéthylène sous haute pression**

(57)    L'invention est un procédé continu de fabrication de PVDF homopolymère ou copolymère, le comonomère étant choisi parmi les composés contenant un groupe vinyle capable de s'ouvrir par l'actions de radicaux libres pour se polymériser et qui contient, directement attaché à ce groupe vinyle, au moins un atome de fluor, un groupe fluoroalkyle ou un groupe fluoroalkoxy dans lequel :

   (a) Dans un réacteur maintenu à une pression comprise entre 300 et 3000 bars on introduit un flux de VF2 , de comonomère éventuel et d'initiateur radicalaire; Le réacteur contenant essentiellement du VF2, un comonomere éventuel et du PVDF;
   (b) On soutire un flux de mélange réactionnel du réacteur de l'étape (a) qu'on introduit dans un séparateur;
   (c) On récupère dans le séparateur du PVDF à l'état fondu qu'on purge en continu;
   (c1) Le flux de PVDF de l'étape (c) est éventuellement introduit dans un dispositif pour le mettre sous forme de granulés;
   (d) On récupère dans le séparateur du VF2 et éventuellement du comonomère qu'on recycle à l'étape (a).

   Selon une forme avantageuse de l'invention le VF2 frais, l'autre étant le recyclé, qu'on introduit à l'étape (a) contient moins de 5 ppm d'oxygène et de préférence moins de 1 ppm et encore mieux entre 0,1 et 0,8.

   Le procédé de l'invention comprend avantageusement une étape supplémentaire consistant à désoxygéner le VF2 frais avant de l'introduire dans l'étape (a).
   Cette étape consiste à mettre en contact le flux de VF2 avec (i) une quantité suffisante d'un catalyseur dont les sites actifs sont des éléments appartenant aux groupes 8 à 11 de la classification periodique des éléments et (ii) pendant un temps suffisant pour obtenir la teneur désirée en oxygène.
   L'invention concerne aussi cette étape isolée de traitement du VF2 pour en réduire la teneur en oxygène. Cette étape précède avantageusement un procédé différent du précédent dans lequel le VF2 est polymérisé ou copolymérisé.
   Cette désoxygénation peut s'appliquer aussi aux mélanges du VF2 et d'un ou plusieurs comonomères et aussi aux seuls comonomères du VF2.
   L'invention concerne aussi à titre de produit le VF2, le mélange de VF2 et de comonomère ou le seul comonomère (ou mélange de comonomères) contenant moins de 5 ppm d'oxygène, avantageusement moins de 1 ppm et encore mieux entre 0,1 et 0,8 ppm.
   La présente invention concerne aussi un PVDF ayant un rapport Mw/Mn compris entre 1,5 et 1,9.

EP 1 191 042 A1

**Description**

[Domaine de l'invention]

La présente invention concerne un procédé de polymérisation continu du 1,1-difluoroéthylène (VF2) sous haute pression pour produire du polyfluorure de vinylidène (PVDF).

La polymérisation du 1,1-difluoroéthylène est actuellement conduite industriellement dans un milieu aqueux soit en émulsion, soit en suspension. Ce type de polymérisation correspond donc à des procédés discontinus.

Dans le cas de l'émulsion, il est nécessaire d'ajouter au milieu de polymérisation des émulsifiants afin de stabiliser les particules de latex de PVDF formées. Les émulsifiants doivent être éliminés dans une étape ultérieure afin d'assurer au polymère une pureté adéquate. De plus, certains émulsifiants qui sont employés dans le procédé émulsion sont des molécules perfluorées. Des études ont montré que ces molécules avaient tendance à s'accumuler dans la flore aquatique. Bien que considérés comme non nocifs, rien n'est encore connu de l'impact à long terme de cette bio-accumulation.

Dans le cas de la suspension, des colloïdes protecteurs sont incorporés afin de stabiliser les particules de PVDF.

Un autre procédé est actuellement à l'étude dans de nombreux laboratoires. Ce procédé continu se distingue des procédés émulsion/suspension car il est conduit dans du $CO_2$ supercritique (ScCO2) sans additif stabilisant. Au cours de la polymérisation, le PVDF insoluble dans le ScCO2 précipite et forme une poudre. Il est toutefois nécessaire d'ajouter une étape de traitement de la poudre afin de la transformer en granulés de PVDF car ce type de procédé ne permet pas d'obtenir une poudre de granulométrie contrôlée et étroite (comme pour le procédé émulsion).

Enfin il existe aussi un procédé à haute pression dans lequel le VF2 est converti en PVDF uniquement sous l'effet de la pression et de traces d'un peroxyde. La polymérisation sous haute pression permet de s'affranchir des problèmes mentionnés dans les autres procédés cités plus haut:

- Procédé ne nécessitant pas d'additifs stabilisants (surfactants ou colloïdes protecteurs),
- Pas de traitement des poudres.

Un autre avantage du procédé haute pression est d'offrir de meilleures productivités que le procédé continu dans le ScCO2.

La présente invention concerne un procédé de ce type.

[l'art antérieur et le problème technique]

Le brevet FR 1260852 décrit la polymérisation du VF2 sous pression soit en présence d'un milieu de réaction neutre tel que l'eau soit en l'absence d'un milieu de réaction. Selon la première forme on charge dans un autoclave de l'eau desionisée et désoxygénée puis un peroxyde et du VF2, la proportion de peroxyde est de 0,8g pour 35g de VF2. On ferme l'autoclave et on chauffe, la pression s'établit à des valeurs de l'ordre de 40 à 60 bars, la durée de réaction est d'environ 18 heures. Ensuite on refroidit l'autoclave et on y récupère du PVDF. Selon la deuxième forme on opère comme dans la première forme mais sans mettre d'eau, la pression et la durée de réaction sont les mêmes. Il est écrit que cette deuxième forme se prête à un fonctionnement continu dans lequel l'autoclave est relié à une source de VF2 sous pression telle que le VF2 frais pénètre dans l'autoclave lorsque la conversion en polymère a lieu. Selon une variante du catalyseur peut être rajouté en continu ou en discontinu. Cet art antérieur se fonde sur une pression fatale (autogenous pressure) générée par le volume de l'autoclave, les réactifs qu'on a chargés et la température. Le fait qu'on puisse le rendre continu en injectant du VF2 frais pour compenser celui qui se polymérise n'a rien à voir avec un procédé dans lequel la pression de réaction est déterminée par la pression fournie par les pompes d'injection du VF2. Il n'est rien écrit sur la teneur en oxygène du VF2.

Le brevet US 2435537 décrit un procédé semblable au précédent mais toujours en présence d'eau, 50 parties pour 40 parties de VF2, la pression peut être de 1000 bars. Tous les exemples sont en discontinu dans un autoclave. Il est écrit qu'on peut opérer en continu toutefois il est recommandé de toujours utiliser un milieu inerte tel que l'eau pour disperser le catalyseur et controler la réaction par dissipation de la chaleur. Il est écrit que l'oxygène a un effet néfaste sur la polymérisation mais la teneur en oxygene du VF2 n'est pas precisée et il n'est rien écrit sur les moyens de la réduire.

Les brevets FR 2650593 et FR 2689134 décrivent des procédés de synthèse à haute pression soit de copolymères du VF2 et de l'éthylène soit de copolymères du VF2 et d'acrylates fluorés.

Le brevet WO 9828351 décrit la polymérisation en continu du VF2 dans le $CO_2$ supercritique ($75°C$ - 276 bars). On peut aussi fabriquer des copolymères du PVDF. Dans un exemple le débit de monomères fluorés est de 200g/h pour un débit de CO2 de 518g/h.

On a maintenant trouvé un procedé continu de préparation du PVDF homopolymère ou copolymère, le comonomère étant un monomère fluoré mais pas un acrylate, dans lequel on n'utilise pas de solvant organique ni d'eau et qui n'est pas en milieu ScCO2.

[Brève description de l'invention]

L'invention est un procédé continu de fabrication de PVDF homopolymère ou copolymère, le comonomère étant choisi parmi les composés contenant un groupe vinyle capable de s'ouvrir par l'actions de radicaux libres pour se polymériser et qui contient, directement attaché à ce groupe vinyle, au moins un atome de fluor, un groupe fluoroalkyle ou un groupe fluoroalkoxy dans lequel :

(a) Dans un réacteur maintenu à une pression comprise entre 300 et 3000 bars on introduit un flux de VF2 , de comonomère éventuel et d'initiateur radicalaire; Le réacteur contenant essentiellement du VF2, un comonomere éventuel et du PVDF;
(b) On soutire un flux de mélange réactionnel du réacteur de l'étape (a) qu'on introduit dans un séparateur;
(c) On récupère dans le séparateur du PVDF à l'état fondu qu'on purge en continu;
(c1) Le flux de PVDF de l'étape (c) est éventuellement introduit dans un dispositif pour le mettre sous forme de granulés;
(d) On récupère dans le séparateur du VF2 et éventuellement du comonomère qu'on recycle à l'étape (a).

Selon une forme avantageuse de l'invention le VF2 frais, l'autre étant le recyclé, qu'on introduit à l'étape (a) contient moins de 5 ppm d'oxygène et de préférence moins de 1 ppm et encore mieux entre 0,1 et 0,8.
Le procédé de l'invention comprend avantageusement une étape supplémentaire consistant à désoxygéner le VF2 frais avant de l'introduire dans l'étape (a).
Cette étape consiste à mettre en contact le flux de VF2 avec (i) une quantité suffisante d'un catalyseur dont les sites actifs sont des éléments appartenant aux groupes 8 à 11 de la classification periodique des éléments et (ii) pendant un temps suffisant pour obtenir la teneur désirée en oxygène.
L'invention concerne aussi cette étape isolée de traitement du VF2 pour en réduire la teneur en oxygène. Cette étape précède avantageusement un procédé différent du précédent dans lequel le VF2 est polymérisé ou copolymérisé.
Cette désoxygénation peut s'appliquer aussi aux mélanges du VF2 et d'un ou plusieurs comonomères et aussi aux seuls comonomères du VF2.
L'invention concerne aussi à titre de produit le VF2, le mélange de VF2 et de comonomère ou le seul comonomère (ou mélange de comonomères) contenant moins de 5 ppm d'oxygène, avantageusement moins de 1 ppm et encore mieux entre 0,1 et 0,8 ppm.
La présente invention concerne aussi un PVDF ayant un rapport Mw/Mn compris entre 1,5 et 1,9.
Le procédé de l'invention présente de nombreux avantages :

• il n'y a pas d'eau, ni de solvant organique: il s'agit d'un procédé propre, ne nécessitant pas de recycler/traiter l'eau ou de recycler le solvant;
• c'est un procédé « sec » ne nécessitant pas d'éliminer l'eau ou le solvant du polymère : il est moins coûteux en énergie;
• Le polymère est plus propre car il n'est pas souillé par la présence de surfactants ou autres additifs;
• il n'y a pas d'utilisation de surfactants perfluorés bioaccumulables dans l'environnement : procédé respectueux de l'environnement
• il n'y a pas de manipulation de poudre comme pour le procédé dans le ScCO2 : cela implique une simplication de procédé et pas de cyclones à ajouter, pas d'étape de reprise de la poudre pour la transformer en granulés, pas de problème d'explosion de poudre, pas de problème d'électrostatisme;
• il a de meilleures productivités que le procédé ScCO2 (comme cela est démontré à l'exemple 1).

[Description détaillée de l'invention]

**S'agissant des proportions de VF2 et de comonomère** dans le PVDF et donc des proportions de VF2 frais et de comonomère frais qui entrent dans l'étape (a) avantageusement la proportion de comonomère est comprise en poids entre 0 et 50% et de préférence entre 0 et 30%.
**A titre d'exemple de comonomère** on peut citer le fluorure de vinyle; le trifluoroethylene; le chlorotrifluoroethylene (CTFE); le 1,2-difluoroethylene; le tetrafluoroethylene (TFE); l'hexafluoropropylene (HFP); les perfluoro (alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 - dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH2OPO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 ou 4; le perfluorobutyl ethylene (PFBE); le 3,3,3-trifluoropropene et le 2-trifluoromethyl-3 ,3 ,3 -trifluoro- 1 -propene. On peut utiliser plusieurs comonomères.

Le réacteur contient au moins 90% en poids de VF2, d'un (ou plusieurs) comonomère éventuel et de PVDF. Il n'y a pas de solvant organique ni d'eau ni de ScCO2.

**La pression du réacteur** est avantageusement comprise entre 500 et 3000 bars et de préférence entre 1500 et 2500 bars. Le réacteur a un volume tel que le temps de sejour est avantageusement compris entre 1 min et 1 h.

**S'agissant de l'initiateur radicalaire** ce produit est connu en lui même. Des initiateurs de radicaux appropriés qui peuvent être utilisés comprennent le perpivalate de tertiobutyle, le t-butyl-hydroperoxyde, cumène-hydroperoxyde, di-iso-propyl-benzène-hydroperoxyde, di-t-butyl-peroxyde, t-butyl-cumyl-peroxyde, dicumyl-peroxyde, 1,3-bis-t-butylperoxy-isopropyl)benzène, acétyl-peroxyde, benzoyl-peroxyde, iso-butyryl-peroxyde, bis-3,5,5-triméthyl-hexanoyl-peroxyde, et méthyl-éthyl-cétone-peroxyde. L'initiateur peut être mis en solution dans un solvant, on peut citer à titre d'exemple l'heptane et l'isododecane.

Le debit d'initiateur est avantageusement en poids compris entre 2 et 1000 ppm par rapport au débit de VF2 frais ou de l'ensemble du VF2 frais et du comonomère frais et de préférence entre 2 et 100 ppm .

Le débit de VF2 et de comonomère éventuel est ajusté pour compenser la production de PVDF, la température est ajustée par le système de refroidissement du réacteur. Le débit d'initiateur est ajusté pour obtenir une conversion des monomères en PVDF. La température est avantageusement maintenue entre 50°C et 300°C et de préférence entre 90°C et 220°C. On explique plus loin l'intérêt de travailler à une température supérieure à 150°C pour obtenir de faibles cristallinité.

**L'appareillage utilisé** est le même que celui dans lequel on effectue la synthèse du polyéthylène basse densité (LDPE). Ces appareillages sont connus.

Les procédés autoclave et tubulaire font tous deux partie des procédés de polymérisation dits "haute pression" et l'homme du métier comprend immédiatement ce dont il est question. Ces deux procédés font intervenir la polymérisation de l'éthylène par voie radicalaire sous haute pression, généralement comprise entre 100 et 350 MPa et à des températures supérieures à la température de fusion du polyéthylène en formation. Le procédé tubulaire fait intervenir la polymérisation dans un réacteur tubulaire. Un réacteur tubulaire comprend des cylindres dont le diamètre interne est généralement compris entre 1 et 10 cm et dont la longueur va généralement de 0,1 à 3 km. Dans un réacteur tubulaire, le milieu réactionnel est animé d'une grande vitesse linéaire, généralement supérieure à 2 mètres par seconde et des temps de réaction courts, pouvant par exemple être compris entre 0,1 et 5 min.

La pression dans un réacteur tubulaire peut par exemple être comprise entre 200 et 350 MPa.

Le procédé autoclave fait intervenir la polymérisation dans un autoclave dont le rapport longueur / diamètre va généralement de 1 à 25 dans le cas d'un réacteur à zone unique. Dans le cas d'un réacteur à zones multiples, le rapport longueur de chaque zone / diamètre va généralement de 0,5 à 6, étant entendu que le milieu réactionnel s'écoule dans le sens de la longueur. La pression dans un réacteur autoclave peut par exemple être comprise entre 100 et 250 MPa.

**On ne sortirait pas du cadre de l'invention** en ajoutant dans le réacteur ou en sortie un produit pour favoriser l'ecoulement. A titre d'exemple ce produit peut être du CO2 supercritique, mais ceci n'a rien à voir avec une polymérisation dans le ScCO2. En effet la quantité ajoutée est de l'ordre de 0 à 10% en poids de la masse de monomeres fluorés et de PVDF contenus dans le réacteur.

**S'agissant de la teneur en oxygène du VF2** d'une façon générale, il est connu que la présence d'oxygène peut avoir une influence non négligeable sur les polymérisations radicalaires, que celles-ci soient conduites en émulsion, suspension ou en masse, sous basse (P < 500 bar) ou sous haute pression (P > 500 bar). L'oxygène participe en effet aux processus radicalaires et peut jouer le rôle soit d'amorceur soit d'inhibiteur de polymérisation. On pourra se reporter à *Chemical Reviews* **1991,** *91 (2)*, 99-117 pour plus de détails sur les mécanismes exacts mettant en jeu l'espèce $O_2$. Mais on ne savait pas que le VF2 contenait des quantités d'oxygène qui pouvaient gener sa polymérisation quel que soit le procédé utilisé.

Par exemple quand on fabrique du $VF_2$ par un procédé de craquage du 1-chloro 1,1-difluoro éthane :

$$CH_3\text{-}CF_2Cl \rightarrow HCl + VF_2$$

Ce procédé ne permet pas d'obtenir du $VF_2$ contenant moins de 5 ppm d'oxygène résiduel. Généralement, le $VF_2$ issu de ce procédé contient entre 10 et 15 ppm d'oxygène, ce qui est beaucoup trop élevé pour la polymérisation, en particulier sous haute pression. Il est donc souhaitable de pouvoir disposer d'une opération unitaire simple et économique permettant d'éliminer l'oxygène résiduel du $VF_2$ et éventuellement des comonomères.

Le catalyseur utilisé est un catalyseur solide composé de sites actifs dispersés sur un support minéral, contenant éventuellement des promoteurs dont le rôle est d'accroître l'activité chimique du catalyseur. Les sites actifs sont des éléments appartenant aux groupes 8-11 de la classification périodique.

Le catalyseur solide se présente sous forme de granulés, présentant des formes variées (cylindres, plaquettes, billes,...). Le support des sites actifs est préférentiellement minéral. Il peut s'agir d'alumine, de silice, de zéolithe ou silicoaluminate ou de tout autre support connu par l'homme de l'Art de la catalyse hétérogène. Le catalyseur contient entre 0.05 et 5% en poids de l'élément actif.

Afin d'assurer une activité catalytique optimale, le support est de préférence poreux. Le catalyseur présente un volume poreux compris entre 0.001 et 1000 ml/g, de préférence entre 0.01 et 100 ml/g. La surface spécifique du catalyseur permet d'apprécier la faculté du catalyseur à exposer ses sites actifs au flux de réactifs. On exprime la surface spécifique en $m^2/g$, la surface active est comprise entre 1 et 10000 $m^2/g$, de préférence entre 1 et 1000 $m^2/g$.

On peut définir une grandeur, appelée vitesse spatiale, ramenant le débit de gaz à la quantité de catalyseur solide. Cette grandeur peut être exprimée en $Nm^3/m^3/h$ ou bien en kg/kg catalyseur/h, elle est comprise entre 0.01 et 1000 kg/kg/h, de préférence entre 0.1 et 100 kg/kg/h.

Ce procédé est utile pour réduire la teneur en oxygène de 100 ppm à moins de 5 ppm et avantageusement à moins de 1 ppm et plus particulièrement de 30 ppm jusqu'à 0,2 ou 0,8 ppm.

On peut opérer à toute pression, elle est sans effet sur de si faibles teneurs. L'intérêt d'une haute pression est que l'appareillage de mise en contact du VF2 avec le catalyseur est plus compact. Le plus souvent on utilise la pression à laquelle le VF2 à désoxygéner est disponible.

Quant à la température elle peut être comprise entre 0°C et 200°C. Cependant il est avantageux d'être entre 50°C et 100°C.

Préférentiellement il s'agit de l'élément cuivre. Dans le cas de l'élément cuivre, l'élimination de l'oxygène est basée sur les équations chimiques suivantes :

$$2\ Cu + O_2 \rightarrow 2\ CuO$$

$$4\ Cu + 2\ O_2 \rightarrow Cu_2O$$

L'élimination de l'oxygène est réalisée simplement par passage du (ou des) monomère(s) à travers une cartouche. Le catalyseur contenu dans la cartouche est de préférence un catalyseur solide renfermant les éléments cuivre ou palladium. A l'échelle industrielle, compte tenu des débits volumiques plus importants de monomère qu'il est nécessaire de traiter, la cartouche est remplacée par un appareillage de volume plus important. Il pourra s'agir par exemple d'une colonne ou bien d'un ensemble de deux ou plusieurs colonnes fonctionnant en série ou en parallèle. Si les colonnes fonctionnent en parallèle, une étape de régénération du catalyseur pourra avoir lieu pendant qu'une autre colonne assure la désoxygénation du monomère.

Une autre solution pour désoxygéner le monomère consiste à associer au conteneur de $VF_2$ une cartouche désoxygénante directement reliée au conteneur. La désoxygénation a donc lieu en semi-continu chaque fois que le monomère est soutiré du conteneur.

Ce type de catalyseur est déjà connu et utilisé pour traiter des gaz neutres (argon, azote) des boîtes à gants de laboratoire. Cela est nécessaire par exemple pour la manipulation des composés organométalliques qui sont sensibles à l'oxygène (dérivés organométalliques de l'aluminium par exemple). Ces catalyseurs sont aussi utilisés pour éliminer les traces d'oxygène des monomères gazeux contenant uniquement du carbone et de l'hydrogène, par exemple l'éthylène ou le propylène. En effet, pour polymériser efficacement l'éthylène à l'aide de catalyseurs de type Ziegler-Natta, il est nécessaire de disposer de monomère contenant des traces infimes d'oxygène.

On peut citer à titre d'exemple le catalyseur de type R3-15 T5x3 fourni par BASF®.

Cette désoxygénation est utile dans le procédé à haute pression de préparation du PVDF décrit plus haut mais aussi dans les autres procédés de préparation du PVDF.

Cas de la polymérisation sous haute pression selon le procédé principal de la présente invention:

La polymérisation en masse du 1,1-difluoroéthylène pour donner du PVDF est une polymérisation conduite sous haute pression, elle exige que le monomère fluoré soit débarassé de toute trace d'oxygène afin d'éviter une polymérisation intempestive dans le réacteur ou bien même dans les pompes lors de la phase de compression. L'oxygène peut en effet jouer le rôle d'amorceur radicalaire au même titre que les amorceurs radicalaires organiques qui sont ajoutés intentionnellement au milieu de polymérisation. La présence d'oxygène nuit donc à la conduite du procédé et aussi à sa sécurité.

Par exemple, lorsqu'on conduit la polymérisation en masse du $VF_2$ sous 1850 bar, il est nécessaire d'injecter l'équivalent de 7 ppm de perpivalate de tertiobutyle pur (vendu sous le sigle LUP 11 par ATOFINA). Or si le monomère contient 10 ppm d'oxygène résiduel, cela équivaut à une quantité de LUP 11 de 54 ppm, soit bien plus que ce qui est requis pour assurer la polymérisation. Si la teneur en oxygène est abaissée à 1 ppm d'oxygène résiduel, la quantité équivalente de LUP 11 est de 5.4 ppm.

Cas de la polymérisation en émulsion

Dans le cas de la polymérisation en émulsion du $VF_2$, une quantité d'oxygène trop importante peut retarder voire empêcher la polymérisation d'avoir lieu. Des essais ont montré qu'à partir d'une quantité d'oxygène de 20 ppm, la polymérisation est totalement inhibée.

Lorsque la polymérisation du $VF_2$ a lieu en émulsion avec un amorçage par le persufate d'ammonium, des extrémités de chaînes sont terminées par des fragments de l'amorceur. Ces extrémités sont fragiles et donnent par chauffage de l'acide sulfurique qui dégrade le polymère. De même, l'emploi de percarbonates comme amorceurs conduit à la formation d'aldéhydes comme sous-produits de décomposition. Ces aldéhydes peuvent donner lieu à des colorations du polymère lorsque celui-ci est extrudé ou transformé à haute température. Par conséquent, le PVDF préparé en émulsion est d'autant plus stable que la quantité d'amorceur nécessaire est faible. Il y a donc lieu d'abaisser la teneur en oxygène résiduel afin d'utiliser le moins d'amorceur possible.

Par exemple, lorsqu'on conduit la polymérisation en émulsion du VF2, on utilise fréquemment 1 g de persulfate de potassium pour 10 kg de PVDF, ce qui équivaut à 7.7 $10^{-7}$ moles d'anions radicaux par gramme de PVDF. Or si le monomère contient 10 ppm d'oxygène résiduel, cela équivaut à une quantité théorique de 4.3 $10^{-7}$ moles de radicaux O° par gramme de PVDF (pour un extrait sec final de 40% environ). Sans préjuger du mécanisme d'inhibition, on constate que les concentrations sont du même ordre de grandeur. On comprend ainsi l'intérêt que pourrait avoir un VF2 contenant une quantité d'oxygène résiduel inférieur à 1 ppm, surtout pour le VF2 ajouté en cours de polymérisation et qui ne subit pas la procédure de dégazage initiale.

**S'agissant du PVDF de fluidité élevée,** Un autre aspect de l'invention porte sur la possibilité d'obtenir des PVDF (ou les copolymères correspondants) de fluidité (MFI) élevée. Il est en effet connu que par les procédés émulsion ou suspension, il existe une limite à l'obtention de PVDF de haute fluidité.

Le procédé décrit dans la présente invention est particulièrement souple pour ce qui est de l'obtention de ces produits de fluidité élevée. On entend par fluidité la masse de résine s'écoulant dans une filière pendant un temps donné, à une température donnée et sous un poids donné. Il s'agit donc de mesure parfaitement normalisée. Dans le cas du PVDF ou de ses copolymères, on applique la norme suivante : la mesure est effectuée à 230 °C, sous un poids de 5 kg, à travers une filière de 2.09 mm de diamètre. On prépare des PVDF de MFI supérieur à 50, à 100, à 200 et même 400 g / 10 min (sous 230°C 5kg selon ASTM D-1238).

Le contrôle des masses moléculaires est réalisée par l'injection dans le réacteur d'agents de transfert. On peut utiliser les mêmes agents de transfert que pour la production du polyéthylène. Il existe des agents de transfert très efficaces bien connus dans les procédés de production de polyéthylène basse densité. Il s'agit de molécules présentant des atomes d'hydrogène labiles. On peut citer par exemple les alcools, les aldéhydes en particulier le propanal ou le butanal, voire même les alcanes ou alcènes par exemple le butane, le propylène, l'heptane ou l'isododécane.

Ces PVDF de haute fluidité sont utliles pour faire des revêtements. La présente invention concerne aussi à titre de produit ces PVDF ayant ces MFI.

**S'agissant du PVDF de faible cristallinité,** Les procédés émulsion ou suspension sont conduits en présence d'eau, ce qui limite nécessairement la température limite de polymérisation. Celle-ci est généralement comprise entre 80 et 100 °C. C'est un avantage de pouvoir travailler sous haute pression, sans eau, car il est aisé de polymériser le VF2 à des températures supérieures à 150°C. A ces températures, le nombre de défauts présents dans les chaînes de polymères s'accroient ce qui a un effet sur la cristallinité du polymère, donc aussi sur sa température de fusion. Plus le nombre de défauts augmente, plus la cristallinité décroît et plus la température de fusion décroit.

On entend par défaut de retournement toute association de type -CH2-CF2-CF2-CH2- le long de la chaîne de polymère (association appelée aussi tête-tête par opposition à l'association tête-queue type -CH2-CF2-CH2-CF2-). On peut mesurer le taux de défauts à l'aide de la RMN du fluor. On donne donc généralement le taux de défauts de retournement en pourcentage.

Le taux de défauts de retournement peut être compris entre 5 et 15 % et par exemple supérieur à 6 ou 7 %. La présente invention concerne aussi à titre de produit ces PVDF homopolymères ayant ces taux de défauts de retournement.

Une autre manière de mesurer la cristallinité du PVDF est de mesurer la température de fusion. C'est donc un avantage que de pouvoir obtenir facilement des PVDF de température de fusion inférieure à 162 °C et avantageusement comprise entre 162 et 135°C. Cette température peut être par exemple 155, voire inférieure à 150 ou 145°C. La présente invention concerne aussi à titre de produit ces PVDF ayant ces températures de fusion.

Une autre manière de mesurer la cristallinité du PVDF est de mesurer le module élastique. De façon tout à fait intéressante, on s'est aperçu que les PVDF préparés sous haute pression présentaient des modules bas, nous laissant espérer pouvoir utiliser ces produits dans les applications des Kynar Flex® (c'est-à-dire des copolymères VF2-HFP). Le module élastique à 23°C selon ASTM D-1708 peut être compris entre 1020 et 650 MPa. Le module peut être par exemple inférieur à 1000, à 900, à 800 ou même à 700 MPa. La présente invention concerne aussi à titre de produit ces PVDF homopolymères ayant ces modules elastiques.

[Exemples]

Exemples de polymérisation sous haute pression.

Exemple 1

La polymérisation sous haute pression est conduite dans un réacteur autoclave monozone en acier de 100 $cm^3$ équipé d'un séparateur récupérateur, d'un agitateur et thermostaté à 180 °C. Le réacteur est alimenté en continu en 1,1-difluoroéthylène à l'aide de deux pompes reliées en série. Le monomère transite d'abord dans une cartouche contenant un catalyseur au cuivre afin d'éliminer toute trace d'oxygène résiduel. La 1$^{ère}$ pompe comprime le monomère de 50 à 300 bar et alimente la seconde pompe qui porte la pression de 300 à 1850 bar. Le débit du monomère est de 4400 g/h. Sa température à l'entrée du réacteur est de 74 °C. Sa teneur en oxygène mesurée à l'aide d'un oxymètre est de 0.6 ppm.

On introduit également dans le réacteur une solution de perpivalate de tertiobutyle (vendu en solution dans l'isododécane par ATOFINA sous la marque LUP 11-M-75) dilué dans l'heptane à un débit de 41 $cm^3$/h. Le débit en LUP 11 pur est alors après calculs de 1.5 $10^{-2}$ g/h.

En se décomposant l'amorceur déclenche la polymérisation du 1,1-difluoroéthylène, ce qui échauffe le mélange réactionnel. La température au sein du mélange réactionnel est alors de 199 °C. Le polymère est récupéré ensuite par décompression dans des pots de détente. La masse de PVDF récupéré permet de déterminer le rendement de la polymérisation. Le melt-index est mesuré à l'aide d'un melt-indexer à 230 °C sous un poids de 5 kg selon ASTM D-1238.

  conversion : 9.4 %

 MFI [230 °C ; 5 kg] = 6 g/ 10 min

On pourra se rendre compte de la productivité meilleure du procédé sous haute pression par rapport au procédé dans le $CO_2$ supercritique en calculant la vitesse de polymérisation $R_p$:

$$R_p = \frac{\dot{m}_{VF_2} \times conversion}{V}$$

avec

$\dot{m}_{VF_2}$ :  débit massique de VF$_2$ en g/s
V :   volume du réacteur (litre)

pour notre exemple :
 V = 0.1 litre
 $\dot{m}_{VF_2}$ = 4400 g/h = 1.22 g/s
 conversion = 9.4 %
 **$R_p$ = 1.15g /L s**

Dans le cas de la polymérisation dans le ScCO2, on peut calculer de façon identique la vitesse de polymérisation en se fondant sur les exemples donnés dans le brevet WO 9828351. Par exemple, on a :
 V = 0.8 litre
 $\dot{m}_{VF_2}$ = 1.9 g/min = 0.032 g/s
 conversion = 24 %
 **$R_p$ = 0.0096 g /L s**

Le procédé décrit dans ce brevet est donc 120 fois plus rapide que le procédé décrit dans le brevet ci-dessus mentionné.

Exemple 2

On reprend l'exemple 1 avec les conditions suivantes :

pression = 950 bar
débit de 1,1 difluoroéthylène = 5.5 kg/h
débit de LUP 11 =41 $10^{-2}$ g/h
température du mélange réactionnel = 210 °C

conversion = 14 %
MFI [230 °C ; 5 kg] = 200 g/ 10 min
température de fusion = 161.3 °C

Exemple 3

On reprend l'exemple 1 avec les conditions suivantes :

pression = 1450 bar
débit de 1,1 difluoroéthylène = 5.5 kg/h
débit de LUP 11 = 7.4 $10^{-2}$ g/h
température du mélange réactionnel = 195 °C

conversion = 10.8 %
MFI [230 °C ; 5 kg] = 7 g/ 10 min
température de fusion = 158.4 °C

On détermine les masses moléculaires à l'aide de la chromatographie d'exclusion stérique en solution dans le DMF.

Mn = 171000 g/mol
Mw = 290000 g/mol
Mw/Mn = 1.7

On notera que la polymolécularité (1.7) du polymère produit est plus faible que ce qui est généralement rencontré dans les PVDF du marché (plutôt 2-3) et qui sont produits par émulsion/suspension.
Le produit a été évalué à 23°C selon la norme ASTM D-1708 et comparé au grade Kynar® 740 :

Tableau 1

|  | Exemple 3 | Kynar 740 |
|---|---|---|
|  |  |  |
| contrainte au seuil (MPa) | 43 | 54 |
| allongement au seuil (%) | 9.0 | 8.3 |
| contrainte à la rupture (MPa) | 52 | 47 |
| module élastique (MPa) | 932 | 1160 |

On constate que, malgré un module plus faible, le produit de l'exemple 3 possède des propriétés mécaniques (contrainte au seuil notamment) comparables au Kynar 740. Le Kynar® 740 est un PVDF homopolymère.

Exemple 4

On reprend l'exemple 1 avec les conditions suivantes :

pression = 1850 bar

débit de 1,1-difluoroéthylène = 4.3 kg/h

température du mélange réactionnel = 189°C

conversion = 9.6 %

MFI [230°C ; 5 kg] = 8 g/10 min

température de fusion = 158 °C

Mn = 152000 g/mol

Mw = 320000 g/mol

Mw/Mn=2.1

taux de défauts (mesurés par $^{19}$F RMN) = 6.6 %

contrainte au seuil = 46 MPa

allongement au seuil = 8.3%

contrainte à la rupture = 45 MPa

module = 1000 MPa

Exemples de desoxygénation

Le 1,1-difluoroéthylène utilisé alimente un réacteur de polymérisation sous haute pression. Le monomère est pompé à l'aide de deux pompes haute pression en série qui compriment le monomère en deux étapes : pompe 1 de 40 à 300 bar, pompe 2 de 300 à 1900 bar.

Le monomère transite d'abord dans une cartouche cylindrique en acier (dimensions longueur 630 cm, diamètre 168 cm) contenant un catalyseur à base de cuivre vendu par BASF sous la marque R 3-11 (masse de catalyseur : 2000 g). La cartouche métallique est entourée d'un système électrique permettant de réachauffer le catalyseur. A l'aide d'un oxymètre EC180 d'Hermann Moritz, on mesure la teneur en oxygène résiduel à l'entrée et à la sortie de la cartouche pour juger de l'efficacité du catalyseur.

exemple 5

débit de 1,1-difluoroéthylène: 4500 g/h soit 2.25 kg / h / kg de catalyseur
température de la cartouche : 22 °C
pression dans la cartouche : 40 bar
teneur 02 entrée : 16 ppm
teneur 02 sortie : 15 ppm

exemple 6

débit de 1,1-difluoroéthylène: 4500 g/h soit 2.25 kg / h / kg de catalyseur
température de la cartouche : 50 °C
pression dans la cartouche : 40 bar
teneur 02 entrée : 16 ppm
teneur 02 sortie : 0.6 ppm

Ces deux exemples montrent que la désoxygénation du 1,1-difluoroéthylène peut être réalisée de façon efficace et que l'efficacité du catalyseur est améliorée par chauffage de la cartouche.

**Revendications**

1. Procédé continu de fabrication de PVDF homopolymère ou copolymère, le comonomère étant choisi parmi les composés contenant un groupe vinyle capable de s'ouvrir par l'actions de radicaux libres pour se polymériser et qui contient, directement attaché à ce groupe vinyle, au moins un atome de fluor, un groupe fluoroalkyle ou un groupe fluoroalkoxy dans lequel :

   (a) Dans un réacteur maintenu à une pression comprise entre 300 et 3000 bars on introduit un flux de VF2 , de comonomère éventuel et d'initiateur radicalaire; Le réacteur contenant essentiellement du VF2, un comonomere éventuel et du PVDF;
   (b) On soutire un flux de mélange réactionnel du réacteur de l'étape (a) qu'on introduit dans un séparateur;
   (c) On récupère dans le séparateur du PVDF à l'état fondu qu'on purge en continu;
   (c1) Le flux de PVDF de l'étape (c) est éventuellement introduit dans un dispositif pour le mettre sous forme de granulés;
   (d) On récupère dans le séparateur du VF2 et éventuellement du comonomère qu'on recycle à l'étape (a).

2. Procédé selon la revendication 1 dans lequel la proportion de comonomère est comprise entre 0 et 50% en poids.

3. Procédé selon la revendication 1 ou 2 dans lequel la pression est comprise entre 1500 et 2500 bars.

4. Procédé selon l'une quelconque des revendications précédentes dans lequel l'initiateur radicalaire est le perpivalate de tertiobutyle.

5. Procédé selon l'une quelconque de revendications précédentes dans lequel le débit d'initiateur est , en poids, compris entre 2 et 100 ppm de l'ensemble du VF2 frais ou de l'ensemble du VF2 frais et du comonomère frais.

6. Procédé selon l'une quelconque des revendications précédentes dans lequel la température du réacteur est comprise entre 50°C et 300°C.

7. Procédé selon la revendication 6 dans lequel la température est comprise entre 90 et 220°C.

8. Procédé selon l'une quelconque des revendications précédentes dans lequel on ajoute dans le réacteur ou en sortie du reacteur un produit pour favoriser l'ecoulement en quantité de 0 à 10% en poids de la masse de monomeres fluorés et de PVDF contenus dans le réacteur.

9. Procédé selon l'une quelconque des revendications précédentes qui comprend une étape supplémentaire consistant à désoxygéner le VF2 frais et éventuellement le comonomère avant de l'introduire dans l'étape (a) cette étape consistant à mettre en contact le flux de VF2 et de comonomère éventuel avec (i) une quantité suffisante d'un catalyseur dont les sites actifs sont des éléments appartenant aux groupes 8 à 11 de la classification periodique des éléments et (ii) pendant un temps suffisant pour obtenir la teneur désirée en oxygène.

10. Procédé de desoxygenation d'un flux comprenant au moins un monomère fluoré choisi parmi le VF2 et ceux ayant un groupe vinyle capable de s'ouvrir par l'actions de radicaux libres pour se polymériser et qui contient, directement attaché à ce groupe vinyle, au moins un atome de fluor, un groupe fluoroalkyle ou un groupe fluoroalkoxy consistant à mettre en contact ce flux avec (i) une quantité suffisante d'un catalyseur dont les sites actifs sont des éléments appartenant aux groupes 8 à 11 de la classification periodique des éléments et (ii) pendant un temps suffisant pour obtenir la teneur désirée en oxygène.

11. Procédé selon la revendication 9 ou 10 dans lequel le support des sites actifs est un minéral choisi parmi l'alumine, la silice, une zéolithe et un silicoaluminate.

12. Procédé selon la revendication 11 dans lequel le catalyseur contient entre 0.05 et 5% en poids de l'élément actif.

13. Procédé selon l'une quelconque des revendications 9 à 12 dans lequel la température est comprise entre 0 et 200°C.

14. Procédé selon la revendication 13 dans lequel la température est comprise entre 50°C et 100°C.

**15.** Procédé selon l'une quelconque des revendications 9 à 14 dans lequel l'élement actif est le cuivre ou le palladium.

**16.** Procédé selon l'une quelconque des revendications 9 à 15 dans lequel le flux de VF2 désoxygéné et de comonomère éventuel contient moins de 5 ppm d'oxygène.

**17.** Procédé selon la revendication 16 dans lequel la teneur en oxygène est de moins de 1 ppm.

**18.** Flux comprenant au moins un monomère fluoré choisi parmi le VF2 et ceux ayant un groupe vinyle capable de s'ouvrir par l'actions de radicaux libres pour se polymériser et qui contient, directement attaché à ce groupe vinyle, au moins un atome de fluor, un groupe fluoroalkyle ou un groupe fluoroalkoxy ce flux contenant moins de 5 ppm d'oxygène.

**19.** Flux selon la revendication 18 contenant moins de 1 ppm d'oxygène.

**20.** PVDF comprenant éventuellement de 0 à 50 % de comonomères présentant une fluidité, mesurée à 230 °C sous un poids de 5 kg, supérieure à 50 g/10 min selon ASTM D-1238.

**21.** PVDF comprenant éventuellement de 0 à 50 % de comonomères présentant une fluidité, mesurée à 230 °C sous un poids de 5 kg, supérieure à 100 g/10 min selon ASTM D-1238.

**22.** PVDF comprenant éventuellement de 0 à 50 % de comonomères présentant une fluidité, mesurée à 230 °C sous un poids de 5 kg, supérieure à 200 g/10 min selon ASTM D-1238.

**23.** PVDF comprenant éventuellement de 0 à 50 % de comonomères présentant une fluidité, mesurée à 230 °C sous un poids de 5 kg, supérieure à 400 g/10 min selon ASTM D-1238.

**24.** PVDF homopolymère présentant un taux de défauts mesuré par RMN du fluor supérieur à 6%.

**25.** PVDF homopolymère présentant un taux de défauts mesuré par RMN du fluor supérieur à 7%.

**26.** PVDF homopolymère présentant un module élastique (à 23°C, selon ASTM D-1708) compris entre 1020 et 650 MPa.

**27.** PVDF homopolymère selon la revendication 26 présentant un module élastique (à 23°C, selon ASTM D-1708) inférieur à 1000 MPa.

**28.** PVDF homopolymère selon la revendication 26 présentant un module élastique (à 23°C, selon ASTM D-1708) inférieur à 900 MPa.

**29.** PVDF homopolymère selon la revendication 26 présentant un module élastique (à 23°C, selon ASTM D-1708) inférieur à 800 MPa.

**30.** PVDF homopolymère selon la revendication 26 présentant un module élastique (à 23°C, selon ASTM D-1708) inférieur à 700 MPa.

**31.** PVDF ayant un rapport Mw/Mn compris entre 1,5 et 1,9.

**Office européen
des brevets**

**RAPPORT DE RECHERCHE EUROPEENNE**

Numéro de la demande

EP 01 40 2387

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y,D | EP 0 411 990 A (ATOCHEM ELF SA) 6 février 1991 (1991-02-06) * revendications; exemples * | 1-31 | C08F14/22 C07C17/389 C08F2/02 |
| Y | US 3 987 117 A (MEYER GUNTHER ET AL) 19 octobre 1976 (1976-10-19) * revendications; exemple 1 * | 1-31 | |
| A | GB 2 184 737 A (YARSLEY TECHNICAL CENTRE LIMIT) 1 juillet 1987 (1987-07-01) * abrégé * * page 1, ligne 50-55 * | 1-31 | |

**DOMAINES TECHNIQUES RECHERCHES (Int.Cl.7)**

C08F
C07C

Le présent rapport a été établi pour toutes les revendications

| Lieu de la recherche | Date d'achèvement de la recherche | Examinateur |
|---|---|---|
| LA HAYE | 18 janvier 2002 | Friederich, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 191 042 A1**

ANNEXE AU RAPPORT DE RECHERCHE EUROPEENNE
RELATIF A LA DEMANDE DE BREVET EUROPEEN NO.

EP 01 40 2387

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

18-01-2002

| Document brevet cité au rapport de recherche | Date de publication | Membre(s) de la famille de brevet(s) | Date de publication |
|---|---|---|---|
| EP 0411990 A | 06-02-1991 | FR 2650593 A1 | 08-02-1991 |
| | | CA 2022565 A1 | 04-02-1991 |
| | | EP 0411990 A1 | 06-02-1991 |
| | | JP 3088811 A | 15-04-1991 |
| | | NO 903216 A | 04-02-1991 |
| US 3987117 A | 19-10-1976 | DE 2321121 A1 | 14-11-1974 |
| | | BE 814148 A1 | 16-08-1974 |
| | | FR 2227249 A1 | 22-11-1974 |
| | | GB 1431518 A | 07-04-1976 |
| | | IT 1004484 B | 10-07-1976 |
| | | JP 50013304 A | 12-02-1975 |
| | | NL 7405671 A | 29-10-1974 |
| | | SU 482942 A3 | 30-08-1975 |
| GB 2184737 A | 01-07-1987 | AUCUN | |

EPO FORM P0460

Pour tout renseignement concernant cette annexe : voir Journal Officiel de l'Office européen des brevets, No.12/82